# EUROPÄISCHE PATENTSCHRIFT

(11) **EP 3 879 084 B1**
(45) Veröffentlichungstag und Bekanntmachung des Hinweises auf die Patenterteilung: **03.07.2024**
(21) Anmeldenummer: 21157034.6
(22) Anmeldetag: 15.02.2021
(51) Int. Cl.: F01N 3/021, F01N 3/10, F01N 3/20, F01N 13/00, F01N 9/00

(54) **ABGASBEHANDLUNGSSYSTEM FÜR EINE ABGASANLAGE EINER BRENNKRAFTMASCHINE UND VERFAHREN ZUM BETREIBEN EINES DERARTIGEN ABGASBEHANDLUNGSSYSTEMS**
EXHAUST GAS TREATMENT SYSTEM FOR AN EXHAUST SYSTEM OF A COMBUSTION ENGINE AND METHOD FOR OPERATING SUCH AN EXHAUST GAS TREATMENT SYSTEM
SYSTÈME DE TRAITEMENT DES GAZ D'ÉCHAPPEMENT POUR UNE INSTALLATION DE GAZ D'ÉCHAPPEMENT D'UN MOTEUR À COMBUSTION INTERNE ET PROCÉDÉ DE FONCTIONNEMENT D'UN TEL SYSTÈME DE TRAITEMENT DES GAZ D'ÉCHAPPEMENT

(30) Priorität: 13.03.2020 DE 102020106882
(43) Veröffentlichungstag der Anmeldung: 15.09.2021
(73) Patentinhaber: Purem GmbH, 66539 Neunkirchen (DE)
(72) Erfinder: Datz, Wolfgang, 72076 Tübingen (DE); Zimmermann, Lisa, 73732 Esslingen (DE)
(74) Vertreter: Ruttensperger Lachnit Trossin Gomoll

(56) Entgegenhaltungen:
- WO-A1-2015/179720
- DE-A1-102006 014 073
- DE-A1-102016 102 356

## Beschreibung

Die Erfindung betrifft ein Abgasbehandlungssystem für eine Abgasanlage einer Brennkraftmaschine, beispielsweise in einem Nutzkraftfahrzeug, welches dazu betrieben wird, den Schadstoffanteil in dem von der Brennkraftmaschine ausgestoßenen Abgas zu mindern. Ferner betrifft die Erfindung ein Verfahren zum Betreiben eines derartigen Abgasbehandlungssystems.

Bei Fahrzeugen mit Diesel-Brennkraftmaschinen, wie zum Beispiel Nutzkraftfahrzeugen, werden SCR-(Selektive Katalytische Reduktion)-Katalysatoreinheiten eingesetzt, um den Stickoxidanteil im Abgas zu mindern. Stromaufwärts derartiger SCR-Katalysatoreinheiten wird als Reduktionsmittel ein Gemisch aus Harnstoff und Wasser in den Abgasstrom eingespritzt. Das im Bereich eines Mischers bzw. stromaufwärts einer jeweiligen SCR-Katalysatoreinheit generierte Gemisch aus Abgas und Reduktionsmittel wird in einer katalytischen Reaktion in einer jeweiligen SCR-Katalysatoreinheit umgesetzt.

Aus der DE 10 2006 014 073 A1 ist ein Abgasbehandlungssystem bekannt, bei dem ein SCR-Hauptkatalysator und ein SCR-Nebenkatalysator zueinander parallel geschaltet, also von Abgas parallel durchströmbar sind. Dem SCR-Hauptkatalysator ist eine Sperrvorrichtung zugeordnet, durch welchen dieser gegen Durchströmung von Abgas absperrbar ist. Der SCR-Nebenkatalysator ist immer von Abgas durchströmbar.

Ein aus der DE 10 2016 102 356 A1 bekanntes Abgasbehandlungssystem gemäß dem Oberbegriff des Anspruchs 1 weist zwei von dem von einer Brennkraftmaschine ausgestoßenen Abgas parallel durchströmbare SCR-Katalysatoreinheiten auf. Eine der beiden SCR-Katalysatoreinheiten ist mit einem mit Kupfer umfassenden Substrat aufgebaut und somit insbesondere für einen Betrieb mit Abgastemperaturen von bis 350 °C besonders geeignet. Die andere der beiden SCR-Katalysatoreinheiten ist mit einem Eisen umfassenden Substrat aufgebaut und somit insbesondere für einen Betrieb mit Abgastemperaturen von über 350 °C geeignet. Abhängig von der Temperatur des in einem stromaufwärts bezüglich der beiden SCR-Katalysatoreinheiten angeordneten Abgasheizer zusätzlich erwärmbaren Abgases wird der Abgasstrom auf die beiden SCR-Katalysatoreinheiten verteilt bzw. einer der beiden SCR-Katalysatoreinheiten zugeleitet.

Es ist die Aufgabe der vorliegenden Erfindung, ein Abgasbehandlungssystem für eine Abgasanlage einer Brennkraftmaschine und ein Verfahren zum Betreiben eines derartigen Abgasbehandlungssystems vorzusehen, mit welchen eine verbesserte Anpassung an verschiedene Betriebszustände einer Brennkraftmaschine erreicht wird.

Gemäß einem ersten Aspekt wird diese Aufgabe gelöst durch ein Abgasbehandlungssystem für eine Abgasanlage einer Brennkraftmaschine gemäß Anspruch 1. Das Abgasbehandlungssystem umfasst eine Mehrzahl von zueinander parallel geschalteten SCR-Katalysatoreinheiten, wobei wenigstens eine SCR-Katalysatoreinheit der zueinander parallel geschalteten SCR-Katalysatoreinheiten zur Durchströmung mit Abgas wahlweise freigebbar und absperrbar ist.

In dem erfindungsgemäß aufgebauten Abgasbehandlungssystem ist die Möglichkeit geschaffen, nicht alle zueinander parallel geschalteten SCR-Katalysatoreinheiten gleichzeitig für das Durchströmen mit Abgas freizugeben. Dies bietet beispielsweise die Möglichkeit, in einer Start-Betriebsphase, also bei vergleichsweise kaltem System und geringer Abgastemperatur, den Abgasstrom auf eine bzw. eine verringerte Anzahl an SCR-Katalysatoreinheiten zu konzentrieren bzw. auf eine oder mehrere SCR-Katalysatoreinheiten zu konzentrieren, die für einen Betrieb mit geringerer Temperatur besonders angepasst ist bzw. sind. Es wird dadurch eine vergleichsweise schnelle Erwärmung dieser in der Start-Betriebsphase durchströmten SCR-Katalysatoreinheit bzw. SCR-Katalysatoreinheiten und damit ein schnelleres Erreichen der zum Einsetzen der katalytischen Reaktion erforderlichen Temperatur in einer jeweiligen SCR-Katalysatoreinheit gewährleistet. Ist das System erwärmt bzw. hat das Abgas eine höhere Temperatur, können dann andere oder mehrere SCR-Katalysatoreinheiten zugeschaltet bzw. betrieben werden, um für diesen Betrieb optimale Bedingungen für die Abgasbehandlung bereitzustellen.

Um eine hohe Flexibilität im Betrieb sicherstellen zu können, ist jede der zueinander parallel geschalteten SCR-Katalysatoreinheiten zur Durchströmung mit Abgas wahlweise freigebbar und absperrbar.

Erfindungsgemäß kann für eine hohe Flexibilität jeder zur Durchströmung mit Abgas wahlweise freigebbaren und absperrbaren SCR-Katalysatoreinheit der zueinander parallel geschalteten SCR-Katalysatoreinheiten ein Absperrorgan zugeordnet sein.

Für eine Anpassung des Abgasbehandlungssystems an verschiedene Betriebsphasen einer Brennkraftmaschine bzw. einer dieser zugeordneten Abgasanlage weisen wenigstens zwei SCR-Katalysatoreinheiten der zueinander parallel geschalteten SCR-Katalysatoreinheiten zueinander unterschiedliche Katalysatorkapazitäten auf.

Derartige unterschiedliche Katalysatorkapazitäten werden dadurch erreicht, dass die zueinander parallel geschalteten SCR-Katalysatoreinheiten mit zueinander unterschiedlichen Katalysatorkapazitäten zueinander unterschiedlich große zur Durchführung einer katalytischen Reaktion wirksame Katalysatoroberflächen aufweisen. Zusätzlich können die zueinander parallel geschalteten SCR-Katalysatoreinheiten mit zueinander unterschiedlichen Katalysatorkapazitäten unterschiedliche NH₃-Speichervolumina aufweisen.

Alternativ oder zusätzlich sind bei dem erfindungsgemäßen Abgasbehandlungssystem wenigstens zwei der zueinander parallel geschalteten SCR-Katalysatoreinheiten zueinander baugleich.

Die zueinander parallel geschalteten SCR-Katalysatoreinheiten können jeweils ein mit katalytisch wirksamem Material beschichtetes oder mit katalytisch wirksamem Material aufgebautes, vorzugsweise extrudiertes Substrat aufweisen, wobei in jedem Substrat Abgasdurchströmzellen gebildet sind, wobei wenigstens zwei der zueinander parallel geschalteten SCR-Katalysatoreinheiten:
- Substrate mit sich unterscheidenden Anzahlen oder/und Dichten an Abgasdurchströmzellen aufweisen, oder/und
- Substrate mit unterschiedlichen Wandstärken zwischen einander benachbarten Abgasdurchströmzellen aufweisen, oder/und
- Substrate mit unterschiedlichen Querschnittsdimensionierungen oder/und Querschnittsgeometrien der darin vorgesehenen Abgasdurchströmzellen aufweisen, oder/und
- Substrate mit sich unterscheidenden Querschnittsabmessungen oder/und Längen in Abgasströmungsrichtung oder/und Volumina aufweisen, oder/und
- Substrate mit unterschiedlichen Substrat-Aufbaumaterialien aufweisen, oder/und
- Substrate mit unterschiedlichen Porositäten der Substrat-Aufbaumaterialien aufweisen, oder/und
- mit unterschiedlichen katalytisch wirksamen Materialien beschichtete oder aufgebaute, vorzugsweise extrudierte Substrate aufweisen.

Eine optimale Anpassung an verschiedene Temperaturzustände bzw. verschiedene Lastzustände kann beispielsweise dadurch erreicht werden, dass wenigstens eine der zueinander parallel geschalteten SCR-Katalysatoreinheiten ausgebildet ist mit:
- einem Substrat mit einer Abgasdurchströmzellendichte im Bereich von 1290 bis 2580 Abgasdurchströmzellen pro cm², oder/und
- einem Substrat mit einem Substratdurchmesser im Bereich von 14 bis 27 cm, oder/und
- einem Substrat mit einem Substrat-Aufbaumaterial mit höherer Porosität, und dass wenigstens eine der zueinander parallel geschalteten SCR-Katalysatoreinheiten ausgebildet ist mit:
- einem Substrat mit einer Abgasdurchströmzellendichte im Bereich von 2580 bis 3870 Abgasdurchströmzellen pro cm², oder/und
- einem Substrat mit einem Substratdurchmesser im Bereich von 24 bis 33 cm, oder/und
- einem Substrat mit einem Substrat-Aufbaumaterial mit geringerer Porosität.

Für einen weiter verringerten Schadstoffanteil im Abgas kann wenigstens eine zu den zueinander parallel geschalteten SCR-Katalysatoreinheiten seriell geschaltete Katalysatoreinheit vorgesehen sein oder/und kann wenigstens eine zu den zueinander parallel geschalteten SCR-Katalysatoreinheiten seriell geschaltete Partikelfiltereinheit vorgesehen sein.

Beispielsweise kann eine zu den zueinander parallel geschalteten SCR-Katalysatoreinheiten seriell geschaltete Katalysatoreinheit eine Oxidationskatalysatoreinheit sein oder/und kann eine zu den zueinander parallel geschalteten SCR-Katalysatoreinheiten seriell geschaltete Katalysatoreinheit eine SCR-Katalysatoreinheit sein.

Um auch im Zusammenhang mit einer derartigen seriell geschalteten SCR-Katalysatoreinheit eine hohe Flexibilität im Betrieb erreichen zu können, kann wenigstens einer zu den zueinander parallel geschalteten SCR-Katalysatoreinheiten seriell geschalteten SCR-Katalysatoreinheit ein Absperrorgan zum wahlweisen Freigeben und Absperren zur Durchströmung mit Abgas zugeordnet sein.

Zum Einspritzen des für die selektive katalytische Reduktion erforderlichen Reduktionsmittels kann stromaufwärts bezüglich jeder SCR-Katalysatoreinheit wenigstens eine Reaktionsmittel-Eingabeeinheit vorgesehen sein.

Gemäß einem weiteren Aspekt wird die eingangs angegebene Aufgabe gelöst durch ein Verfahren zum Betreiben eines erfindungsgemäß aufgebauten Abgasbehandlungssystems in einer Abgasanlage einer Brennkraftmaschine, bei welchem Verfahren in einer Start-Betriebsphase oder einer Niedriglast-Betriebsphase der Brennkraftmaschine nicht alle zueinander parallel geschalteten SCR-Katalysatoreinheiten zur Durchströmung mit Abgas freigegeben werden.

Da in der Start-Betriebsphase bzw. der Niedriglast-Betriebsphase der Brennkraftmaschine bei vergleichsweise kaltem System und geringer Abgastemperatur nur ein Teil der, beispielsweise nur eine einzige der zueinander parallel geschalteten SCR-Katalysatoreinheiten mit Abgas durchströmt wird, wird eine Konzentration auf ein vergleichsweise geringes zu erwärmendes Volumen und damit ein schnelleres Einsetzen der katalytischen Reaktion erreicht.

Um nach längerem Betrieb, also bei erwärmtem System und erhöhter Abgastemperatur, eine optimale Abgasreinigung gewährleisten zu können, wird vorgeschlagen, dass in einer von der Start-Betriebsphase oder der Niedriglast-Betriebsphase sich unterscheidenden ersten Last-Betriebsphase der Brennkraftmaschine wenigstens eine in der Start-Betriebsphase oder der Niedriglast-Betriebsphase zur Durchströmung mit Abgas freigegebene SCR-Katalysatoreinheit der zueinander parallel geschalteten SCR-Katalysatoreinheiten und wenigstens eine in der Start-Betriebsphase oder der Niedriglast-Betriebsphase zur Durchströmung mit Abgas nicht freigegebene SCR-Katalysatoreinheit der zueinander parallel geschalteten SCR-Katalysatoreinheiten zur Durchströmung mit Abgas freigegeben werden.

Beispielsweise kann vorgesehen sein, dass in der ersten Last-Betriebsphase nicht alle in der Start-Betriebsphase oder der Niedriglast-Betriebsphase zur Durchströmung mit Abgas nicht freigegebenen SCR-Katalysatoreinheiten der zueinander parallel geschalteten SCR-Katalysatoreinheiten gleichzeitig zur Durchströmung mit Abgas freigegeben werden.

Um dafür zu sorgen, dass über die Betriebslebensdauer hinweg eine näherungsweise gleichmäßige Belastung und somit auch eine näherungsweise gleichmäßige Alterung der SCR-Katalysatoreinheiten erreicht wird, wird vorgeschlagen, dass in der ersten Last-Betriebsphase in der Start-Betriebsphase oder der Niedriglast-Betriebsphase zur Durchströmung mit Abgasen nicht freigegebene SCR-Katalysatoreinheiten der zueinander parallel geschalteten SCR-Katalysatoreinheiten abwechselnd zur Durchströmung mit Abgas freigegeben werden.

Weiter kann in einer von einer Start-Betriebsphase oder einer Niedriglast-Betriebsphase sich unterscheidenden zweiten Last-Betriebsphase der Brennkraftmaschine vorgesehen sein, dass keine in der Start-Betriebsphase oder der Niedriglast-Betriebsphase zur Durchströmung mit Abgas freigegebene SCR-Katalysatoreinheit der zueinander parallel geschalteten SCR-Katalysatoreinheiten zur Durchströmung mit Abgas freigegeben wird, und dass in der zweiten Last-Betriebsphase wenigstens eine in der Start-Betriebsphase oder der Niedriglast-Betriebsphase nicht zur Durchströmung mit Abgas freigegebene SCR-Katalysatoreinheit der zueinander parallel geschalteten SCR-Katalysatoreinheiten, vorzugsweise jede in der Start-Betriebsphase oder der Niedriglast-Betriebsphase nicht zur Durchströmung mit Abgas freigegebene SCR-Katalysatoreinheit der zueinander parallel geschalteten SCR-Katalysatoreinheiten, zur Durchströmung mit Abgas freigegeben wird. Damit kann eine Überlastung der in der Start-Betriebsphase bzw. der Niedriglast-Betriebsphase aktiven SCR-Katalysatoreinheit bzw. SCR-Katalysatoreinheiten vermieden werden.

In einer von einer Start-Betriebsphase sich unterscheidenden dritten Last-Betriebsphase der Brennkraftmaschine kann vorgesehen sein, dass keine in der Start-Betriebsphase zur Durchströmung mit Abgas nicht freigegebene SCR-Katalysatoreinheit der zueinander parallel geschalteten SCR-Katalysatoreinheiten zur Durchströmung mit Abgas freigegeben wird. In dieser Betriebsphase wird also nur diejenige SCR-Katalysatoreinheit oder werden nur diejenigen SCR-Katalysatoreinheiten der zueinander parallel geschalteten SCR-Katalysatoreinheiten betrieben, welche auch in der Start-Betriebsphase aktiv ist bzw. sind.

Die erste Last-Betriebsphase kann eine Teillast-Betriebsphase der Brennkraftmaschine sein, die zweite Last-Betriebsphase kann eine Volllast-Betriebsphase der Brennkraftmaschine sein, und die dritte Last-Betriebsphase kann eine Niedriglast-Betriebsphase sein.

Für die Zwecke der vorliegenden Erfindung kann beispielsweise ein Beenden der Start-Betriebsphase durch den Ablauf einer vorbestimmten Zeitdauer ab Inbetriebnahme der Brennkraftmaschine oder/und durch das Erreichen einer vorbestimmten Abgastemperatur oder/und durch das Erreichen einer vorbestimmten Temperatur im Bereich des Abgasbehandlungssystems gekennzeichnet sein. Eine Niedriglast-Betriebsphase kann eine Betriebsphase sein, in welcher bei erwärmter Brennkraftmaschine bzw. erwärmter Abgasanlage die Drehzahl der Brennkraftmaschine oder/und ein von der Brennkraftmaschine abgegebenes Antriebsdrehmoment bzw. die Leistungsanforderung an die Brennkraftmaschine einen ersten Last-Grenzwert nicht überschreitet. Eine Teillast-Betriebsphase kann sich beispielsweise dadurch auszeichnen, dass die Drehzahl der Brennkraftmaschine oder/und das von der Brennkraftmaschine abgegebene Antriebsdrehmoment bzw. die Leistungsanforderung an die Brennkraftmaschine über dem ersten Last-Grenzwert liegt, einen über dem ersten Last-Grenzwert liegenden zweiten Last-Grenzwert aber nicht überschreitet, während die Volllast-Betriebsphase sich dadurch auszeichnen kann, dass die Drehzahl oder/und das von der Brennkraftmaschine abgegebene Antriebsdrehmoment bzw. die Leistungsanforderung an die Brennkraftmaschine über dem zweiten Last-Grenzwert liegt.

Bei einer für eine effiziente Abgasreinigung besonders vorteilhaften Vorgehensweise kann wenigstens eine in der Start-Betriebsphase oder/und eine Niedrigtemperatur-Betriebsphase zur Durchströmung mit Abgas freigegebene SCR-Katalysatoreinheit ein Substrat mit einer Abgasdurchströmzellendichte im Bereich von 1290 bis 2580 Abgasdurchströmzellen pro cm² oder/und mit einem Substratdurchmesser im Bereich von 14 bis 27 cm oder/und mit einem Substrat-Aufbaumaterial mit höherer Porosität aufweisen, und wenigstens eine in einer Teillast-Betriebsphase oder/und einer Volllast-Betriebsphase der Brennkraftmaschine zur Durchströmung mit Abgas freigegebene SCR-Katalysatoreinheit kann ein Substrat mit einer Abgasdurchströmzellendichte im Bereich von 2580 bis 3870 Abgasdurchströmzellen pro cm² oder/und mit einem Substratdurchmesser im Bereich von 24 bis 33 cm oder/und mit einem Substrat-Aufbaumaterial mit geringerer Porosität aufweisen.

Die vorliegende Erfindung wird nachfolgend mit Bezug auf die beiliegenden Figuren detailliert beschrieben. Es zeigt:
- Fig. 1: in prinzipartiger Darstellung ein Abgasbehandlungssystem für eine Abgasanlage einer Brennkraftmaschine;
- Fig. 2: in prinzipartiger Darstellung ein Substrat für eine SCR-Katalysatoreinheit.

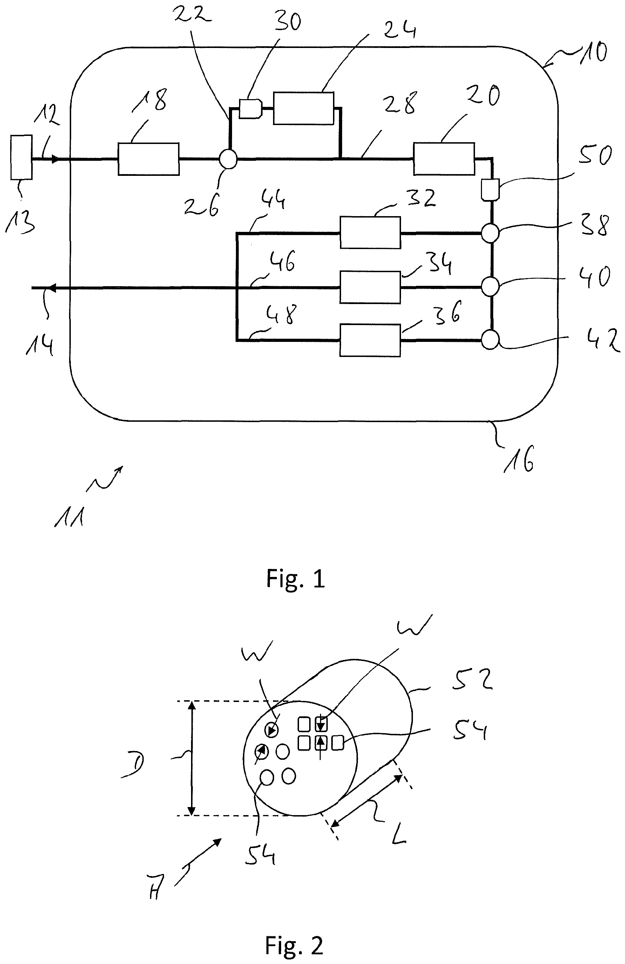

Das in Fig. 1 dargestellte Abgasbehandlungssystem 10 für eine Abgasanlage 11 einer Brennkraftmaschine 13 umfasst einen Einlassbereich 12, in welchem das von der Brennkraftmaschine 13 ausgestoßene Abgas in das Abgasbehandlungssystem 10 eintritt. In einem Auslassbereich 14 verlässt das im Abgasbehandlungssystem 10 behandelte Abgas das Abgasbehandlungssystem 10. Die verschiedenen nachfolgend beschriebenen Systembereiche des Abgasbehandlungssystems 10 können in einem Gehäuse 16 untergebracht sein, das in mehrere über Kanäle bzw. Leitungen miteinander verbundene Gehäusebereiche aufgegliedert sein kann.

Das Abgasbehandlungssystem 10 umfasst, folgend auf den Einlassbereich 12, einen Diesel-Oxidationskatalysator 18. Auf den Diesel-Oxidationskatalysator 18 folgt ein Partikelfilter 20. Im Abgasströmungsweg zwischen dem Diesel-Oxidationskatalysator 18 und dem Partikelfilter 20 ist in einem Bypass-Strömungsweg 22 eine SCR-Katalysatoreinheit 24 vorgesehen. Der SCR-Katalysatoreinheit 24 ist ein Absperrorgan 26, zum Beispiel Ventil, zugeordnet, welches den von einem Abgas-Hauptströmungskanal 28 abzweigenden Bypass-Strömungsweg 22 wahlweise zur Durchströmung mit Abgas freigeben oder diesen gegen Durchströmung mit Abgas sperren kann. Dabei kann das Absperrorgan 26 so ausgebildet sein, dass es dann, wenn die SCR-Katalysatoreinheit 24 durchströmt werden soll, den ganzen im Abgas-Hauptströmungskanal 28 strömenden Abgasstrom durch den Bypass-Strömungsweg 22 leitet. Alternativ kann das Absperrorgan 26 so beschaffen sein, dass es einen beispielsweise variablen Anteil des Abgasstroms in den Bypass-Strömungsweg 22 und somit durch die SCR-Katalysatoreinheit 24 leitet.

Stromaufwärts der SCR-Katalysatoreinheit 24, beispielsweise im Bypass-Strömungsweg 22, ist eine Reaktionsmittel-Eingabeeinheit 30, allgemein auch als Injektor bezeichnet, vorgesehen. Die Reaktionsmittel-Eingabeeinheit 30 gibt ein Reaktionsmittel, beispielsweise das für die SCR-Reaktion als Reduktionsmittel eingesetzte Harnstoff/Wasser-Gemisch, in den Abgasstrom ein. In einem beispielsweise auf die Reaktionsmittel-Eingabeeinheit 30 folgenden Mischer kann die Durchmischung von Abgas und Reaktionsmittel unterstützt werden. Es ist darauf hinzuweisen, dass die Reaktionsmittel-Eingabeeinheit 30 beispielsweise auch im Bypass-Strömungsweg 22 stromaufwärts bezüglich der SCR-Katalysatoreinheit 24 vorgesehen sein könnte.

Stromabwärts bezüglich des Partikelfilters 20 sind im dargestellten Ausgestaltungsbeispiel eines Abgasbehandlungssystems 10 drei zueinander parallel geschaltete SCR-Katalysatoreinheiten 32, 34, 36 vorgesehen. In Zuordnung zu jeder dieser parallel geschalteten SCR-Katalysatoreinheiten 32, 34, 36 ist ein jeweiliges Absperrorgan 38, 40, 42, zum Beispiel Ventil, im Abgas-Hauptströmungskanal 28 vorgesehen. Jedes dieser Absperrorgane 38, 40, 42 ist dazu ausgebildet, den oder einen Teil des im Abgas-Hauptströmungskanal 28 strömenden Abgasstroms in eine eine jeweilige SCR-Katalysatoreinheit 32, 34, 36 enthaltende Zweigleitung 44, 46, 48 zu leiten. Somit kann jede der zueinander parallel geschalteten SCR-Katalysatoreinheiten 32, 34, 36 wahlweise zur Durchströmung mit Abgas freigegeben werden bzw. gegen die Durchströmung mit Abgas gesperrt werden.

Stromaufwärts der zueinander parallel geschalteten SCR-Katalysatoreinheiten 32, 34, 36 bzw. der diesen zugeordneten Absperrorgane 38, 40, 42 ist eine weitere Reaktionsmittel-Eingabeeinheit 50 vorgesehen. Diese spritzt das für die Durchführung der katalytischen Reaktion in den SCR-Katalysatoreinheiten 32, 34, 36 erforderliche Reaktionsmittel, also beispielsweise ein Harnstoff/Wasser-Gemisch, in den Abgas-Hauptströmungskanal 28 ein, wobei auch dieser Reaktionsmittel-Eingabeeinheit 50 ein Mischer zum Mischen des eingespritzten Reaktionsmittel mit dem Abgas zugeordnet sein kann.

Es ist darauf hinzuweisen, dass alternativ auch jeder einzelnen der zueinander parallel geschalteten SCR-Katalysatoreinheiten 32, 34, 36 eine separate Reaktionsmittel-Eingabeeinheit in der jeweiligen Zweigleitung 44, 46, 48 stromaufwärts einer jeweiligen SCR-Katalysatoreinheit 32, 34, 36 zugeordnet sein kann.

Das in Fig. 1 dargestellte Abgasbehandlungssystem 10 weist aufgrund seiner baulichen Ausgestaltung eine hohe Variabilität im Betrieb auf. So kann mit der wahlweise betreibbaren SCR-Katalysatoreinheit 24, welche zu den zueinander parallel geschalteten SCR-Katalysatoreinheiten 32, 34, 36 seriell geschaltet ist, ebenso wie der Diesel-Oxidationskatalysator 18 und der Partikelfilter 20, bereits ein Teil des Stickoxidanteils im Abgas abgebaut werden, wenn, beispielsweise in einem Volllast-Betriebszustand der Brennkraftmaschine ein hoher Anteil an Stickoxid vorhanden ist bzw. eine große Abgasmenge ausgestoßen wird. Die zueinander parallel geschalteten SCR-Katalysatoreinheiten 32, 34, 36 können beispielsweise ebenfalls in Abhängigkeit vom Betriebszustand einer Brennkraftmaschine bzw. eines Abgasbehandlungssystems wahlweise aktiviert bzw. deaktiviert werden. Dabei können die zueinander parallel geschalteten SCR-Katalysatoreinheiten 32, 34, 36 zueinander grundsätzlich baugleich sein, können jedoch auch in nachfolgend beschriebener Art und Weise an bestimmte Betriebszustände angepasst unterschiedlich aufgebaut sein.

In einer Start-Betriebsphase, in welcher die Brennkraftmaschine 13 und die Abgasanlage 11 und damit auch das Abgasbehandlungssystem 10 eine vergleichsweise niedrige Temperatur aufweisen und auch das von der Brennkraftmaschine 13 abgegebene Abgas eine vergleichswese niedrige Temperatur aufweist, besteht die Zielsetzung, das Abgasbehandlungssystem 10 möglichst schnell in einen Zustand zu bringen, in welchem die zum Durchführen der selektiven katalytischen Reduktion erforderliche Temperatur erreicht wird. Hierzu kann beispielsweise nur die SCR-Katalysatoreinheit 32 zur Durchströmung mit Abgas freigegeben werden, während alle anderen SCR-Katalysatoreinheiten 24, 34, 36 gegen das Durchströmen mit Abgas gesperrt sind. Der gesamte Abgasstrom wird somit durch die einzige freigegebene SCR-Katalysatoreinheit 32 hindurchgeleitet, so dass gewährleistet ist, dass diese vergleichsweise schnell erwärmt wird und somit auch vergleichsweise schnell die für die Durchführung der katalytischen Reaktion erforderliche Temperatur erreicht.

Nach dem Beenden dieser Start-Betriebsphase, also beispielsweise dann, wenn die Brennkraftmaschine 13 bzw. die Abgasanlage 11 und damit auch das Abgasbehandlungssystem 10 eine ausreichend hohe Temperatur erreicht hat oder/und das von der Brennkraftmaschine ausgestoßene Abgas eine ausreichend hohe Temperatur erreicht hat, können dann auch die SCR-Katalysatoreinheiten 34, 36 zugeschaltet werden. Beispielsweise kann in einer Teillast-Betriebsphase die SCR-Katalysatoreinheit 34 zusätzlich zur Durchströmung freigegeben werden, so dass der gesamte Abgasstrom durch die beiden zueinander parallel geschalteten SCR-Katalysatoreinheiten 32, 34 hindurchgeleitet wird. Um in einem derartigen Betrieb ein gleichmäßiges Altern der zueinander parallel geschalteten SCR-Katalysatoreinheiten 32, 34, 36 zu gewährleisten, kann beispielsweise vorgesehen sein, dass alternierend die SCR-Katalysatoreinheit 34 und die SCR-Katalysatoreinheit 36 zur Durchströmung mit Abgas freigegeben werden, so dass diese über die Betriebslebensdauer hinweg näherungsweise gleich lang belastet, d. h. von Abgas durchströmt werden. Sind alle drei zueinander parallel geschalteten SCR-Katalysatoreinheiten 32, 34, 36 baugleich, kann auch die in der Start-Betriebsphase aktive SCR-Katalysatoreinheit 32 in dieses alternierende Umschalten einbezogen werden, so dass in der Start-Betriebsphase immer eine, jedoch nicht immer die selbe der drei zueinander parallel geschalteten SCR-Katalysatoreinheiten 32, 34, 36 aktiv ist und in der Teillast-Betriebsphase immer zwei der drei zueinander parallel geschalteten SCR-Katalysatoreinheiten 32, 34, 36 von Abgas durchströmt werden, während eine gegen das Durchströmen mit Abgas gesperrt ist.

In einer Volllast-Betriebsphase können alle in der Start-Betriebsphase nicht durchströmten SCR-Katalysatoreinheiten, also die SCR-Katalysatoreinheit 34 und die SCR-Katalysatoreinheit 36 der zueinander parallel geschalteten SCR-Katalysatoreinheiten 32, 34, 36, zur Durchströmung mit Abgas freigegeben werden, ebenso wie die dazu seriell geschaltete SCR-Katalysatoreinheit 24. Die in der Start-Betriebsphase aktive SCR-Katalysatoreinheit 32 kann in einer derartigen Volllast-Betriebsphase gegen das Durchströmen mit Abgas gesperrt werden, so dass über die Betriebslebensdauer hinweg eine Überlastung dieser SCR-Katalysatoreinheit 32 vermieden werden kann. Auch hierbei kann dann, wenn alle zueinander parallel geschalteten SCR-Katalysatoreinheiten 32, 34, 36 zueinander baugleich sind, vorgesehen sein, dass ein Wechsel der in aufeinanderfolgenden Start-Betriebsphasen aktivierten SCR-Katalysatoreinheit erfolgt, so dass auch in auf eine jeweilige Start-Betriebsphase folgenden Volllast- Betriebsphasen eine gleichmäßige Belastung aller SCR-Katalysatoreinheiten 32, 34, 36 erreicht wird.

In einer Niedriglast-Betriebsphase kann die in der Start-Betriebsphase aktive SCR-Katalysatoreinheit 32 vom Abgas durchströmt werden, während die beiden anderen SCR-Katalysatoreinheiten 34, 36 abgesperrt werden. Auch dies trägt zu einer Vergleichmäßigung der Belastung aller zueinander parallel geschalteten SCR-Katalysatoreinheiten 32, 34, 36 bei.

Wie vorangehend dargelegt, können insbesondere die zueinander parallel geschalteten SCR-Katalysatoreinheiten 32, 34, 36 zueinander baugleich sein. Um diese jedoch an diejenigen Betriebsphasen, in welchen sie bevorzugt genutzt werden sollen, optimiert anzupassen, können die zueinander parallel geschalteten SCR-Katalysatoreinheiten 32, 34, 36 sich grundsätzlich auch voneinander unterscheiden. Insbesondere können diese sich unterscheiden in zumindest einem der folgenden Parameter:
- der zur Durchführung der katalytischen Reaktion wirksamen Katalysatoroberfläche,
- dem Substrat-Aufbaumaterial eines mit dem katalytisch wirksamen Material beschichteten Substrats,
- der Porosität des Substrat-Aufbaumaterials,
- der Anzahl bzw. die Flächendichte der in einem jeweiligen Substrat vorgesehenen Abgasdurchströmzellen,
- der Wandstärke der einander benachbarten Abgasdurchströmzellen voneinander trennenden Wände in einem jeweiligen Substrat,
- der Querschnittsdimensionierung oder/und der Querschnittsgeometrie der Abgasdurchströmzellen,
- der Querschnittsabmessung eines jeweiligen Substrats,
- der Länge eines jeweiligen Substrats in Abgasströmungsrichtung,
- dem Volumen eines jeweiligen Substrats,
- dem katalytisch wirksamen Material.

Die Fig. 2 zeigt in prinzipartiger Darstellung ein derartiges Substrat 52 für eine SCR-Katalysatoreinheit. Dieses Substrat kann grundsätzlich von zylindrischer Struktur sein und eine Länge L in der Abgasströmungsrichtung A aufweisen, in welcher das Abas das Substrat 52 im Bereich der darin gebildeten Abgasströmungszellen 54 durchströmt. Bei Ausgestaltung mit kreisrundem Querschnitt weist das Substrat einen Durchmesser D auf. Zwischen den Abgasdurchströmzellen 54, welche im Wesentlichen als in der Abgasströmungsrichtung A sich erstreckende Kanäle ausgebildet sein können, sind Wände 56 gebildet, welche die einzelnen Abgasdurchströmzellen 54 voneinander trennen. Die Abgasdurchströmkanäle 54 können verteilt über den Querschnitt des Substrats 52 im Wesentlichen gleichmäßig verteilt angeordnet sein, so dass auch näherungsweise gleichmäßige Wandstärken W der zwischen den Abgasdurchströmzellen 54 liegenden Wände 56 erreicht werden, wobei für die Zwecke der vorliegenden Erfindung jeweils die minimale Wandstärke W zwischen einander benachbarten Abgasdurchströmzellen 54 betrachtet werden kann. Wie die Fig. 2 dies zeigt, können die Abgasdurchströmzellen 54 verschiedene Querschnittsgeometrien aufweisen, beispielsweise eine Runde oder eine eckige Querschnittsgeometrie, wobei die in einem Substrat 52 vorgesehenen Abgasdurchströmzellen 54 vorzugsweise alle die gleiche Querschnittsgeometrie aufweisen.

An der von Abgas umströmten Oberfläche des Substrats 52 ist das katalytisch wirksame Material, welches beispielsweise Platin sein kann oder enthalten kann, vorgesehen. Dies kann beispielsweise dadurch erfolgen, dass das Substrat mit derartigem katalytisch wirksamen Material beschichtet wird, oder dass das katalytisch wirksame Material in das Substrat-Aufbaumaterial eingemischt und somit beim Herstellen des Substrats 52 gleichzeitig auch die zur Durchführung der katalytischen Reaktion wirksame Katalysatoroberfläche mit dem daran vorgesehenen katalytisch wirksamen Material erzeugt wird.

Soll beispielsweise die SCR-Katalysatoreinheit 32 diejenige Katalysatoreinheit der zueinander parallel geschalteten SCR-Katalysatoreinheiten 32, 34, 36 sein, welche in einer Start-Betriebsphase oder/und einer Niedriglast-Betriebsphase betrieben wird, kann diese grundsätzlich so dimensioniert sein, dass sie kleiner ist bzw. eine geringere thermische Masse aufweist, als die in der Start-Betriebsphase oder/und der Niedriglast-Betriebsphase nicht zu betreibenden SCR-Katalysatoreinheiten 34, 36. Dies kann beispielsweise dadurch erreicht werden, dass das Substrat 52 der SCR-Katalysatoreinheit 32 eine geringere Querschnittsabmessung, also Durchmesser D, oder/und Länge L in der Abgasströmungsrichtung A aufweist, als die Substrate der SCR-Katalysatoreinheiten 34, 36. Auch die Anzahl der Abgasdurchströmzellen 54 im Substrat der SCR-Katalysatoreinheit 32 kann geringer sein, als die Anzahl der beispielsweise sich jeweils in der Längenrichtung des Substrats erstreckenden, kanalartigen Abgasdurchströmzellen 54 in den Substraten der SCR-Katalysatoreinheiten 34, 36. Beispielsweise kann das Substrat 52 der SCR-Katalysatoreinheit 32 bei kreisrunder Querschnittsgeometrie einen Substratdurchmesser D im Bereich von etwa 14 bis 27 cm (5,7 bis 10,5 Zoll) aufweisen, während die Substrate der SCR-Katalysatoreinheiten 34, 36 einen Durchmesser im Bereich von etwa 24 bis 33 cm (9,5 bis 13,0 Zoll) aufweisen können. Die Dichte der Abgasdurchströmzellen im Substrat der SCR-Katalysatoreinheit 32 kann im Bereich von 1290 bis 2580 Abgasdurchströmzellen pro cm² (200 bis 400 Abgasdurchströmzellen pro Quadratzoll) liegen, während die Dichte der Abgasdurchströmzellen in den Substraten der SCR-Katalysatoreinheiten 34, 36 im Bereich von 2580 bis 3870 Abgasdurchströmzellen pro cm² (400 bis 600 Abgasdurchströmzellen pro Quadratzoll) liegen kann. Auch dadurch wird erreicht, dass die in Betriebsphasen mit höherer Last und somit auch größerem Schadstoffausstoß aktiven SCR-Katalysatoreinheiten eine größere Katalysatoroberfläche des für die Durchführung der katalytischen Reaktion vorgesehenen Katalysatormaterials aufweisen, als die in der Start-Betriebsphase zu aktivierende SCR-Katalysatoreinheit 32, bei welcher der Fokus auf einem möglichst schnellen Erreichen der für die katalytische Reaktion erforderlichen Temperatur des katalytisch wirksamen Materials liegt. Bei derartigen Substraten 52 mit unterschiedlichen Anzahlen an Abgasdurchströmzellen pro cm² für verschiedene SCR-Katalysatoreinheiten 32, 34, 36, also unterschiedlichen Zellendichten für diese SCR-Katalysatoreinheiten, können die bzw. alle Abgasdurchströmzellen 54 eine näherungsweise gleiche Querschnittsfläche aufweisen. Dies führt dazu, dass bei einem Substrat 52 mit geringerer Zellendichte, wie es beispielsweise für die SCR-Katalysatoreinheit 32 eingesetzt werden kann, die Wandstärke W zwischen einander benachbarten Zellen größer ist, als bei Substraten 52 mit höherer Zellendichte. Dies führt dazu, dass bei Einsatz eines Substrat-Aufbaumaterials mit höherer Porosität für Substrate 52 mit geringerer Zellendichte gleichwohl eine vergleichsweise hohe mechanische Stabilität erreicht werden kann. Bei einer alternativen Ausgestaltungsform kann vorgesehen sein, dass Substrate 52 mit höherer Zellendichte Zellen mit geringerer Querschnittsfläche aufweisen, als Substrate 52 mit geringerer Zellendichte.

Um die thermische Masse der SCR-Katalysatoreinheit 32 möglichst gering zu halten, kann deren Substrat mit einem Substrat-Aufbaumaterial mit höherer Porosität bereitgestellt sein, als die Substrate der SCR-Katalysatoreinheiten 34, 36, bei welchen die bauliche Ausgestaltung weniger auf eine möglichst geringe thermische Masse fokussiert ist, sondern eine möglichst hohe Robustheit und somit eine möglichst lange Betriebslebensdauer, da grundsätzlich davon auszugehen ist, dass diese in der Start-Betriebsphase nicht zu betreibenden SCR-Katalysatoreinheiten im Betrieb einer Brennkraftmaschine bzw. einer Abgasanlage über längere Zeitdauern von Abgas durchströmt werden, als die in der Start-Betriebsphase oder/und einer Niedriglast-Betriebsphase zu betreibende SCR-Katalysatoreinheit 32. Eine höhere Porosität des Substrat-Aufbaumaterials bewirkt auch eine größere zur Durchführung der katalytischen Reaktion wirksame Katalysatoroberfläche, da dafür nicht nur die Innenoberfläche der Abgasdurchströmzellen 54 zur Verfügung steht, sondern auch die gesamte Innenoberfläche der porösen Struktur.

Grundsätzlich können die in der Start-Betriebsphase bzw. der Niedriglast-Betriebsphase nicht zu betreibenden SCR-Katalysatoreinheiten 34, 36 der zueinander parallel geschalteten SCR-Katalysatoreinheiten 32, 34, 36 zueinander baugleich sein, können sich aber auch zum Erhalt einer höheren Variabilität in zumindest einem der vorangehend angeführten Parameter unterscheiden. Weiter ist darauf hinzuweisen, dass auch mehr als drei zueinander parallel geschaltete Katalysatoreinheiten vorgesehen sein können, so dass auch abhängig von der Größe einer Brennkraftmaschine und dem zu erwartenden Abgasstrom in verschiedenen Betriebsphasen der Brennkraftmaschine durch das Kombinieren mehrerer SCR-Katalysatoreinheiten eine optimale Anpassung an den jeweils ausgestoßenen Abgasstrom erreicht werden kann.

Die seriell geschaltete bzw. zu schaltbare SCR-Katalysatoreinheit 24 kann den gleichen Aufbau aufweisen wie eine der zur zueinander parallel geschalteten Katalysatoreinheiten 32, 34, 36.

Die erfindungsgemäße Vorgehensweise ist nicht auf die Anwendung bei Diesel-Brennkraftmaschinen beschränkt, sondern könnte beispielsweise auch bei Gasanwendung bei sogenannten Lean-Gasmotoren Anwendung finden, die mit einem Lambda-Wert von größer 1 betrieben werden.

## Patentansprüche

1. Abgasbehandlungssystem für eine Abgasanlage einer Brennkraftmaschine umfassend eine Mehrzahl von zueinander parallel geschalteten SCR-Katalysatoreinheiten (32, 34, 36), wobei jede der zueinander parallel geschalteten SCR- Katalysatoreinheiten (32, 34, 36) zur Durchströmung mit Abgas wahlweise freigebbar und absperrbar ist,
**dadurch gekennzeichnet, dass**:
- wenigstens zwei SCR-Katalysatoreinheiten (32, 34, 36) der zueinander parallel geschalteten SCR-Katalysatoreinheiten (32, 34, 36) zum Bereitstellen zueinander unterschiedlicher Katalysatorkapazitäten zueinander unterschiedlich große zur Durchführung einer katalytischen Reaktion wirksame Katalysatoroberflächen aufweisen,
oder/und
- wenigstens zwei SCR-Katalysatoreinheiten (32, 34, 36) der zueinander parallel geschalteten SCR-Katalysatoreinheiten (32, 34, 36) zueinander baugleich sind.

2. Abgasbehandlungssystem nach Anspruch 1, **dadurch gekennzeichnet, dass** wenigstens zwei SCR-Katalysatoreinheiten (32, 34, 36) der zueinander parallel geschalteten SCR-Katalysatoreinheiten (32, 34, 36) zum Bereitstellen zueinander unterschiedlicher Katalysatorkapazitäten zueinander unterschiedliche NHs-Speichervolumina aufweisen.

3. Abgasbehandlungssystem nach Anspruch 1 oder 2, **dadurch gekennzeichnet, dass** jeder zur Durchströmung mit Abgas wahlweise freigebbaren und absperrbaren SCR-Katalysatoreinheit (32, 34, 36) der zueinander parallel geschalteten SCR-Katalysatoreinheiten (32, 34, 36) ein Absperrorgan (38, 40, 42) zugeordnet ist.

4. Abgasbehandlungssystem nach einem der vorangehenden Ansprüche,
**dadurch gekennzeichnet, dass** die zueinander parallel geschalteten SCR-Katalysatoreinheiten (32, 34, 36) jeweils ein mit katalytisch wirksamem Material beschichtetes oder mit katalytisch wirksamem Material aufgebautes, vorzugsweise extrudiertes Substrat (52) aufweisen, wobei in jedem Substrat (52) Abgasdurchströmzellen (54) gebildet sind, wobei wenigstens zwei der zueinander parallel geschalteten SCR-Katalysatoreinheiten (32, 34, 36) Substrate (52) mit sich unterscheidenden Anzahlen oder/und Dichten an Abgasdurchströmzellen (54) aufweisen.

5. Abgasbehandlungssystem nach Anspruch 4, **dadurch gekennzeichnet, dass** wenigstens eine der zueinander parallel geschalteten SCR-Katalysatoreinheiten (32, 34, 36) ausgebildet ist mit einem Substrat (52) mit einer Abgasdurchströmzellendichte im Bereich von 1290 bis 2580 Abgasdurchströmzellen pro cm², und dass wenigstens eine der zueinander parallel geschalteten SCR-Katalysatoreinheiten (32, 34, 36) ausgebildet ist mit einem Substrat (52) mit einer Abgasdurchströmzellendichte im Bereich von 2580 bis 3870 Abgasdurchströmzellen pro cm².

6. Abgasbehandlungssystem nach einem der vorangehenden Ansprüche, **dadurch gekennzeichnet, dass** wenigstens eine zu den zueinander parallel geschalteten SCR-Katalysatoreinheiten (32, 34, 36) seriell geschaltete Katalysatoreinheit (18, 24) vorgesehen ist, oder/und dass wenigstens eine zu den zueinander parallel geschalteten SCR-Katalysatoreinheiten (32, 34, 36) seriell geschaltete Partikelfiltereinheit (20) vorgesehen ist.

7. Abgasbehandlungssystem nach Anspruch 6, **dadurch gekennzeichnet, dass** eine zu den zueinander parallel geschalteten SCR-Katalysatoreinheiten (32, 34, 36) seriell geschaltete Katalysatoreinheit (18) eine Oxidationskatalysatoreinheit (18) ist, oder/und dass eine zu den zueinander parallel geschalteten SCR-Katalysatoreinheiten (32, 34, 36) seriell geschaltete Katalysatoreinheit (24) eine SCR-Katalysatoreinheit (24) ist.

8. Abgasbehandlungssystem nach Anspruch 7, **dadurch gekennzeichnet, dass** wenigstens einer zu den zueinander parallel geschalteten SCR-Katalysatoreinheiten (32, 34, 36) seriell geschalteten SCR-Katalysatoreinheit (24) ein Absperrorgan (30) zum wahlweisen Freigeben und Absperren zur Durchströmung mit Abgas zugeordnet ist.

9. Abgasbehandlungssystem nach einem der vorangehenden Ansprüche, **dadurch gekennzeichnet, dass** stromaufwärts bezüglich jeder SCR-Katalysatoreinheit (24, 32, 34, 36) wenigstens eine Reaktionsmittel-Eingabeeinheit (30, 50) vorgesehen ist.

10. Verfahren zum Betreiben eines Abgasbehandlungssystems (10) nach einem der vorangehenden Ansprüche in einer Abgasanlage (11) einer Brennkraftmaschine (13), bei welchem Verfahren in einer Start-Betriebsphase oder einer Niedriglast-Betriebsphase der Brennkraftmaschine (13) nicht alle zueinander parallel geschalteten SCR-Katalysatoreinheiten (32, 34, 36) zur Durchströmung mit Abgas freigegeben werden.

11. Verfahren nach Anspruch 10, **dadurch gekennzeichnet, dass** in einer von der Start-Betriebsphase oder der Niedriglast-Betriebsphase sich unterscheidenden ersten Last-Betriebsphase der Brennkraftmaschine (13) wenigstens eine in der Start-Betriebsphase oder der Niedriglast-Betriebsphase zur Durchströmung mit Abgas freigegebene SCR-Katalysatoreinheit (32) der zueinander parallel geschalteten SCR-Katalysatoreinheiten (32, 34, 36) und wenigstens eine in der Start-Betriebsphase oder der Niedriglast-Betriebsphase zur Durchströmung mit Abgas nicht freigegebene SCR-Katalysatoreinheit (34, 36) der zueinander parallel geschalteten SCR-Katalysatoreinheiten (32, 34, 36) zur Durchströmung mit Abgas freigegeben werden,
vorzugsweise wobei
in der ersten Last-Betriebsphase nicht alle in der Start-Betriebsphase oder der Niedriglast-Betriebsphase zur Durchströmung mit Abgas nicht freigegebenen SCR-Katalysatoreinheiten (34, 36) der zueinander parallel geschalteten SCR-Katalysatoreinheiten (32, 34, 36) gleichzeitig zur Durchströmung mit Abgas freigegeben werden, vorzugsweise wobei in der ersten Last-Betriebsphase in der Start-Betriebsphase oder der Niedriglast-Betriebsphase zur Durchströmung mit Abgasen nicht freigegebene SCR-Katalysatoreinheiten (34, 36) der zueinander parallel geschalteten SCR-Katalysatoreinheiten abwechselnd zur Durchströmung mit Abgas freigegeben werden.

12. Verfahren nach Anspruch 10 oder 11, **dadurch gekennzeichnet, dass** in einer von einer Start-Betriebsphase oder einer Niedriglast-Betriebsphase sich unterscheidenden zweiten Last-Betriebsphase der Brennkraftmaschine (13) keine in der Start-Betriebsphase zur Durchströmung mit Abgas freigegebene SCR-Katalysatoreinheit (32) der zueinander parallel geschalteten SCR-Katalysatoreinheiten (32, 34, 36) zur Durchströmung mit Abgas freigegeben wird, und dass in der zweiten Last-Betriebsphase wenigstens eine in der Start-Betriebsphase oder der Niedriglast-Betriebsphase nicht zur Durchströmung mit Abgas freigegebene SCR-Katalysatoreinheit (34, 36) der zueinander parallel geschalteten SCR-Katalysatoreinheiten (32, 34, 36), vorzugsweise jede in der Start-Betriebsphase oder der Niedriglast-Betriebsphase nicht zur Durchströmung mit Abgas freigegebene SCR-Katalysatoreinheit (34, 36) der zueinander parallel geschalteten SCR-Katalysatoreinheiten (32, 34, 36), zur Durchströmung mit Abgas freigegeben wird.

13. Verfahren nach einem der Ansprüche 10-12, **dadurch gekennzeichnet, dass** in einer von einer Start-Betriebsphase sich unterscheidenden dritten Last-Betriebsphase der Brennkraftmaschine (13) keine in der Start-Betriebsphase zur Durchströmung mit Abgas nicht freigegebene SCR-Katalysatoreinheit (34, 36) der zueinander parallel geschalteten SCR-Katalysatoreinheiten (32, 34, 36) zur Durchströmung mit Abgas freigegeben wird.

14. Verfahren nach Anspruch 11 und Anspruch 12 und Anspruch 13, **dadurch gekennzeichnet, dass** die erste Last-Betriebsphase eine Teillast-Betriebsphase der Brennkraftmaschine (13) ist, dass die zweite Last-Betriebsphase eine Volllast-Betriebsphase der Brennkraftmaschine (13) ist, und dass die dritte Last-Betriebsphase einen Niedriglast-Betriebsphase der Brennkraftmaschine (13) ist.

15. Verfahren nach einem der Ansprüche 10-14, **dadurch gekennzeichnet, dass** wenigstens eine in der Start-Betriebsphase oder/und einer Niedriglast-Betriebsphase zur Durchströmung mit Abgas freigegebene SCR-Katalysatoreinheit (32) der zueinander parallel geschalteten SCR-Katalysatoreinheiten (32, 34, 36) ein Substrat mit einem Substratdurchmesser im Bereich von 14 bis 27 cm aufweist, und dass wenigstens eine in einer Teillast-Betriebsphase oder/und einer Volllast-Betriebsphase der Brennkraftmaschine zur Durchströmung mit Abgas freigegebene SCR-Katalysatoreinheit (34, 36) der zueinander parallel geschalteten SCR-Katalysatoreinheiten (32, 34, 36) ein Substrat mit einem Substratdurchmesser im Bereich von 24 bis 33 cm aufweist.

## Claims

1. Exhaust gas treatment system for an exhaust system of an internal combustion engine, comprising a plurality of SCR catalytic converter units (32, 34, 36) connected in parallel to one another, wherein each of the SCR catalytic converter units (32, 34, 36) connected in parallel to one another can optionally be released and blocked for the flow of exhaust gas,
**characterized in that**:
- at least two SCR catalytic converter units (32, 34, 36) of the SCR catalytic converter units (32, 34, 36) connected in parallel to one another have mutually different catalytic converter surfaces effective for carrying out a catalytic reaction for providing mutually different catalytic converter capacities,
or/and
- at least two SCR catalytic converter units (32, 34, 36) of the SCR catalytic converter units (32, 34, 36) connected in parallel to one another have the same configuration.

2. Exhaust gas treatment system in accordance with claim 1, **characterized in that** at least two SCR catalytic converter units (32, 34, 36) of the SCR catalytic converter units (32, 34, 36) connected in parallel to one another have mutually different NH₃ storage volumes for providing mutually different catalytic converter capacities.

3. Exhaust gas treatment system in accordance with claim 1 or 2, **characterized in that** a blocking element (38, 40, 42) is associated to each SCR converter unit (32, 34, 36) of the SCR catalytic converter units (32, 34, 36) connected in parallel to one another which can optionally be released and blocked for the flow of exhaust gas.

4. Exhaust gas treatment system in accordance with one of the above claims, **characterized in that** the SCR catalytic converter units (32, 34, 36) connected in parallel to one another have each a preferably extruded substrate (52) coated with catalytically active material or made with a catalytically active material, wherein exhaust gas flow cells (54) are formed in each substrate (52), wherein at least two of the SCR catalytic converter units (32, 34, 36) connected in parallel to one another have substrates (52) with different numbers or/and densities of exhaust gas flow cells (54).

5. Exhaust gas treatment system in accordance with claim 4, **characterized in that** at least one of the SCR catalytic converter units (32, 34, 36) connected in parallel to one another is configured with a substrate (52) with an exhaust gas flow cell density in the range of 1290 to 2580 exhaust gas flow cells per cm², and **in that** at least one of the SCR catalytic converter units (32, 34, 36) connected in parallel to one another is configured with a substrate (52) with an exhaust gas flow cell density in the range of 2580 to 3870 exhaust gas flow cells per cm².

6. Exhaust gas treatment system in accordance with one of the above claims, **characterized in that** at least one SCR catalytic converter unit (18, 24) connected in series to the SCR catalytic converter units (32, 34, 36) connected in parallel to one another is provided, or/and that at least one particle filter unit (20) connected in series to the SCR catalytic converter units (32, 34, 36) connected in parallel to one another is provided.

7. Exhaust gas treatment system in accordance with claim 6, **characterized in that** a catalytic converter unit (18) connected in series to the SCR catalytic converter units (32, 34, 36) connected in parallel to one another is an oxidation catalytic converter unit (18) or/and that a catalytic converter unit (24) connected in series to the SCR catalytic converter units (32, 34, 36) connected in parallel to one another is an SCR catalytic converter unit (24).

8. Exhaust gas treatment system in accordance with claim 7, **characterized in that** a blocking element (30) is associated to at least one SCR catalytic converter unit (24) connected in series with the SCR catalytic converter units (32, 34, 36) connected in parallel to one another for optionally releasing and blocking the flow of exhaust gas.

9. Exhaust gas treatment system in accordance with one of the above claims, **characterized in that** at least one reactant introduction unit (30, 50) is provided upstream in relation to each SCR catalytic converter unit (24, 32, 34, 36).

10. Process for operating an exhaust gas treatment system (10) in accordance with one of the above claims in an exhaust system (11) of an internal combustion engine (13), in which process not all SCR catalytic converter units (32, 34, 36) connected in parallel to one another are released for the flow of exhaust gas during a start operating phase or during a low-load operating phase of the internal combustion engine (13).

11. Process in accordance with claim 10, **characterized in that** during a first load operating phase of the internal combustion engine (13) different from the start operating phase or from the low-load operating phase at least one SCR catalytic converter unit (32) of the SCR catalytic converter units (32, 34, 36) connected in parallel to one another which is released for the flow of exhaust gas during the start operating phase or during the low-load operating phase, and at least one SCR catalytic converter unit (34, 36) of the SCR catalytic converter units (32, 34, 36) connected in parallel to one another, which is not released for the flow of exhaust gas during the start operating phase or during the low-load operating phase, are released for the flow of exhaust gas,
preferably wherein
during the first load operating phase not all the SCR catalytic converter units (34, 36) of the SCR catalytic converter units (32, 34, 36) connected in parallel to one another, which are not released for the flow of exhaust gas during the start operating phase or during the low-load operating phase, are released simultaneously for the flow of exhaust gas, preferably wherein during the first load operating phase, SCR catalytic converter units (34, 36) of the SCR catalytic converter units connected in parallel to one another, which are not released for the flow of exhaust gas during the start operating phase or during the low-load operating phase, are alternatingly released for the flow of exhaust gas.

12. Process in accordance with claim 10 or 11, **characterized in that** during a second load operating phase of the internal combustion engine (13), which is different from a start operating phase or from a low-load operating phase, no SCR catalytic converter unit (32) of the SCR catalytic converter units (32, 34, 36) connected in parallel to one another, which is released for the flow of exhaust gas during the start operating phase, is released for the flow of exhaust gas, and that during the second load operating phase at least one SCR catalytic converter unit (34, 36) of the SCR catalytic converter units (32, 34, 36) connected in parallel to one another, which is not released for the flow of exhaust gas during the start operating phase or during the low-load operating phase, and preferably each SCR catalytic converter unit (34, 36) of the SCR catalytic converter units (32, 34, 36) connected in parallel to one another, which is not released for the flow of exhaust during the start operating phase or during the low-load operating phase, is released for the flow of exhaust gas.

13. Process in accordance with one of the claims 10-12, **characterized in that** during a third load operating phase of the internal combustion engine (13), which is different from a start operating phase, no SCR catalytic converter unit (34, 36) of the SCR catalytic converter units (32, 34, 36) connected in parallel to one another, which is not released for the flow of exhaust gas during the start operating phase, is released for the flow of exhaust gas.

14. Process in accordance with claim 11 and claim 12 and claim 13, **characterized in that** the first load operating phase is a partial load operating phase of the internal combustion engine (13); that the second load operating phase is a full-load operating phase of the internal combustion engine (13), and that the third load operating phase is a low-load operating phase of the internal combustion engine (13).

15. Process in accordance with one of the claims 10-14 **characterized in that** at least one SCR catalytic converter unit (32) of the SCR catalytic converter units (32, 34, 36) connected in parallel to one another, which is released for the flow of exhaust gas during the start operating phase or/and during a low-load operating phase, has a substrate with a substrate diameter in the range of 14 cm to 27 cm and that at least one SCR catalytic converter unit (34, 36) of the SCR catalytic converter units (32, 34, 36) connected in parallel to one another, which is released for the flow of exhaust gas during a partial load operating phase or/and during a full-load operating phase, has a substrate with a substrate diameter in the range of 24 cm to 33 cm.

## Revendications

1. Système de traitement des gaz d'échappement pour un système d'échappement d'un moteur à combustion interne, comprenant une pluralité d'unités de convertisseur catalytique SCR (32, 34, 36) connectées en parallèle les unes aux autres, dans lequel chacune des unités de convertisseur catalytique SCR (32, 34, 36) connectées en parallèle les unes aux autres peut optionnellement être libérée et bloquée pour l'écoulement des gaz d'échappement,
**caractérisé en ce que**
- au moins deux unités de convertisseur catalytique SCR (32, 34, 36) des unités de convertisseur catalytique SCR (32, 34, 36) connectées en parallèle les unes aux autres ont des surfaces de convertisseur catalytique mutuellement différentes efficaces pour effectuer une réaction catalytique afin de fournir des capacités de convertisseur catalytique mutuellement différentes,
ou/et
- au moins deux unités de convertisseur catalytique SCR (32, 34, 36) parmi les unités de convertisseur catalytique SCR (32, 34, 36) connectées en parallèle les unes aux autres ont la même configuration.

2. Système de traitement des gaz d'échappement selon la revendication 1, **caractérisé en ce qu'**au moins deux unités de convertisseur catalytique SCR (32, 34, 36) des unités de convertisseur catalytique SCR (32, 34, 36) connectées en parallèle les unes aux autres ont des volumes de stockage de NH₃ mutuellement différents pour fournir des capacités de convertisseur catalytique mutuellement différentes.

3. Système de traitement des gaz d'échappement selon la revendication 1 ou 2, **caractérisé en ce qu'**un élément de blocage (38, 40, 42) est associé à chaque unité de convertisseur SCR (32, 34, 36) des unités de convertisseur catalytique SCR (32, 34, 36) connectées en parallèle les unes aux autres, qui peut optionnellement être libérée et bloquée pour l'écoulement des gaz d'échappement.

4. Système de traitement des gaz d'échappement selon l'une des revendications précédentes, **caractérisé en ce que** les unités de convertisseur catalytique SCR (32, 34, 36) connectées en parallèle les unes aux autres ont chacune un substrat de préférence extrudé (52) revêtu d'un matériau catalytiquement actif ou fabriqué avec un matériau catalytiquement actif, dans lequel des cellules d'écoulement des gaz d'échappement (54) sont formées dans chaque substrat (52), dans lequel au moins deux des unités de convertisseur catalytique SCR (32, 34, 36) connectées en parallèle les unes aux autres ont des substrats (52) avec des nombres et/ou des densités différents de cellules d'écoulement des gaz d'échappement (54).

5. Système de traitement des gaz d'échappement selon la revendication 4, **caractérisé en ce qu'**au moins une des unités de convertisseur catalytique SCR (32, 34, 36) connectées en parallèle les unes aux autres est configurée avec un substrat (52) avec une densité de cellules d'écoulement des gaz d'échappement dans la plage de 1290 à 2580 cellules d'écoulement des gaz d'échappement par cm², et **en ce qu'**au moins une des unités de convertisseur catalytique SCR (32, 34, 36) connectées en parallèle les unes aux autres est configurée avec un substrat (52) ayant une densité de cellules d'écoulement des gaz d'échappement comprise entre 2580 et 3870 cellules d'écoulement des gaz d'échappement par cm².

6. Système de traitement des gaz d'échappement selon l'une des revendications précédentes, **caractérisé en ce qu'**au moins une unité de catalyseur SCR (18, 24) connectée en série aux unités de catalyseur SCR (32, 34, 36) connectées en parallèle les unes aux autres est prévue, ou/et **en ce qu'**au moins une unité de filtre à particules (20) connectée en série aux unités de catalyseur SCR (32, 34, 36) connectées en parallèle les unes aux autres est prévue.

7. Système de traitement des gaz d'échappement selon la revendication 6, **caractérisé en ce qu'**une unité de convertisseur catalytique (18) connectée en série aux unités de convertisseur catalytique SCR (32, 34, 36) connectées en parallèle les unes aux autres est une unité de convertisseur catalytique d'oxydation (18) ou/et **en ce qu'**une unité de convertisseur catalytique (24) connectée en série aux unités de convertisseur catalytique SCR (32, 34, 36) connectées en parallèle les unes aux autres est une unité de convertisseur catalytique SCR (24).

8. Système de traitement des gaz d'échappement selon la revendication 7, **caractérisé en ce qu'**un élément de blocage (30) est associé à au moins une unité de convertisseur catalytique SCR (24) connectée en série avec les unités de convertisseur catalytique SCR (32, 34, 36) connectées en parallèle les unes aux autres pour optionnellement libérer et bloquer l'écoulement des gaz d'échappement.

9. Système de traitement des gaz d'échappement selon l'une des revendications précédentes, **caractérisé en ce qu'**au moins une unité d'introduction de réactif (30, 50) est prévue en amont par rapport à chaque unité de convertisseur catalytique SCR (24, 32, 34, 36).

10. Procédé de fonctionnement d'un système de traitement des gaz d'échappement (10) selon l'une des revendications précédentes dans un système d'échappement (11) d'un moteur à combustion interne (13), dans lequel ne pas toutes les unités de convertisseur catalytique SCR (32, 34, 36) connectées en parallèle les unes aux autres sont libérées pour l'écoulement des gaz d'échappement pendant une phase de fonctionnement de démarrage ou pendant une phase de fonctionnement à faible charge du moteur à combustion interne (13).

11. Procédé selon la revendication 10, **caractérisé en ce que** pendant une première phase de fonctionnement à charge du moteur à combustion interne (13), différente de la phase de fonctionnement de démarrage ou de la phase de fonctionnement à faible charge, au moins une unité de catalyseur SCR (32) des unités de catalyseur SCR (32, 34, 36) connectées en parallèle les unes aux autres qui est libérée pour l'écoulement des gaz d'échappement pendant la phase de fonctionnement de démarrage ou pendant la phase de fonctionnement à faible charge, et au moins une unité de convertisseur catalytique SCR (34, 36) des unités de catalyseur SCR (32, 34, 36) connectées en parallèle les unes aux autres, qui n'est pas libérée pour l'écoulement des gaz d'échappement pendant la phase de fonctionnement de démarrage ou pendant la phase de fonctionnement à faible charge, sont libérées pour l'écoulement des gaz d'échappement,
de préférence, dans lequel
pendant la première phase de fonctionnement à charge, toutes les unités de catalyseur SCR (34, 36) des unités de catalyseur SCR (32, 34, 36) connectées en parallèle les unes aux autres, qui sont libérées pour l'écoulement des gaz d'échappement pendant la phase de fonctionnement de démarrage ou pendant la phase de fonctionnement à faible charge, ne sont pas libérées simultanément pour l'écoulement des gaz d'échappement, de préférence, dans lequel, pendant la première phase de fonctionnement à charge, les unités de convertisseur catalytique SCR (34, 36) des unités de convertisseur catalytique SCR connectées en parallèle les unes aux autres, qui ne sont pas libérées pour l'écoulement des gaz d'échappement pendant la phase de fonctionnement de démarrage ou pendant la phase de fonctionnement à faible charge, sont alternativement libérées pour l'écoulement des gaz d'échappement.

12. Procédé selon la revendication 10 ou 11, **caractérisé en ce que** pendant une deuxième phase de fonctionnement à charge du moteur à combustion interne (13), qui est différente d'une phase de fonctionnement de démarrage ou d'une phase de fonctionnement à faible charge, aucune unité de convertisseur catalytique SCR (32) des unités de convertisseur catalytique SCR (32, 34, 36) connectées en parallèle les unes aux autres, qui est libérée pour l'écoulement des gaz d'échappement pendant la phase de fonctionnement de démarrage, est libérée pour l'écoulement des gaz d'échappement, et **en ce que** pendant la deuxième phase de fonctionnement à charge, au moins une unité de convertisseur catalytique SCR (34, 36) des unités de catalyseur SCR (32, 34, 36) connectées en parallèle, qui n'est pas libérée pour l'écoulement des gaz d'échappement pendant la phase de fonctionnement de démarrage ou pendant la phase de fonctionnement à faible charge, et de préférence chaque unité de catalyseur SCR (34, 36) des unités de catalyseur SCR (32, 34, 36) connectées en parallèle, qui n'est pas libérée pour l'écoulement des gaz d'échappement pendant la phase de fonctionnement de démarrage ou pendant la phase de fonctionnement à faible charge, est libérée pour l'écoulement des gaz d'échappement.

13. Procédé selon l'une des revendications 10 à 12, **caractérisé en ce que** pendant une troisième phase de fonctionnement à charge du moteur à combustion interne (13), qui est différente d'une phase de fonctionnement de démarrage, aucune unité de convertisseur catalytique SCR (34, 36) des unités de convertisseur catalytique SCR (32, 34, 36) connectées en parallèle les unes aux autres, qui n'est pas libérée pour l'écoulement des gaz d'échappement pendant la phase de fonctionnement de démarrage, est libérée pour l'écoulement des gaz d'échappement.

14. Procédé selon la revendication 11, la revendication 12 et la revendication 13, **caractérisé en ce que** la première phase de fonctionnement à charge est une phase de fonctionnement à charge partielle du moteur à combustion interne (13) ; **en ce que** la deuxième phase de fonctionnement à charge est une phase de fonctionnement à pleine charge du moteur à combustion interne (13), et **en ce que** la troisième phase de fonctionnement à charge est une phase de fonctionnement à faible charge du moteur à combustion interne (13).

15. Procédé selon l'une des revendications 10 à 14, **caractérisé en ce qu'**au moins une unité de convertisseur catalytique SCR (32) des unités de convertisseur catalytique SCR (32, 34, 36) connectées en parallèle les unes aux autres, qui est libérée pour l'écoulement des gaz d'échappement pendant la phase de fonctionnement de démarrage ou/et pendant une phase de fonctionnement à faible charge, comprend un substrat dont le diamètre est compris entre 14 et 27 cm et qu'au moins une unité de convertisseur catalytique SCR (34, 36) des unités de convertisseur catalytique SCR (32, 34, 36) connectées en parallèle, qui est libérée pour l'écoulement des gaz d'échappement pendant une phase de fonctionnement à charge partielle et/ou pendant une phase de fonctionnement à pleine charge, comprend un substrat dont le diamètre est compris entre 24 et 33 cm.
